# EUROPEAN PATENT SPECIFICATION

(11) **EP 2 263 409 B1**
(45) Date of publication and mention of the grant of the patent: **29.07.2015**
(21) Application number: 08807557.7
(22) Date of filing: 05.09.2008
(51) Int. Cl.: H04W 72/04

(54) **PACKET COMMUNICATIONS METHODS AND APPARATUS USING HALF-DUPLEX UPLINK AND DOWNLINK TRANSMISSION INTERVALS THAT SUPPORT PACKET RETRANSMISSION AND EXPANSION**
PAKETKOMMUNIKATIONSVERFAHREN UND VORRICHTUNGEN MIT HALBDUPLEX-UPLINK- UND DOWNLINK-ÜBERTRAGUNGSINTERVALLEN, DIE PAKETNEUÜBERTRAGUNG UND EXPANSION UNTERSTÜTZEN
PROCÉDÉS ET APPAREIL DE COMMUNICATIONS PAR PAQUETS UTILISANT DES INTERVALLES DE TRANSMISSION EN LIAISON MONTANTE ET EN LIAISON DESCENDANTE À L'ALTERNAT QUI SUPPORTENT UNE RETRANSMISSION ET UNE EXTENSION DE PAQUET

(30) Priority: 04.03.2008 US 41784
(43) Date of publication of application: 22.12.2010
(73) Proprietor: Sony Ericsson Mobile Communications AB, 221 88 Lund (SE)
(72) Inventor: HAARTSEN, Jacobus, NL-7772BG Hardenberg (NL)
(74) Representative: Valea AB
(86) International application number: PCT/IB2008/053606
(87) International publication number: WO 2009/109815

(56) References cited:
- WO-A-2008/024890
- IPWIRELESS ET AL: "R1-080504 Operation of Half Duplex" 3GPP TSG RAN WG1#51BIS, 18 January 2008 (2008-01-18), XP002516024 Seville, Spain
- DAJIE JIANG ET AL: "Principle and Performance of Semi-Persistent Scheduling for VoIP in LTE System" WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 2861-2864, XP031261882 ISBN: 978-1-4244-1311-9
- CHINA UNICOM ET AL: "Joint Proposal for 3GPP2 Physical Layer for FDD Spectra; C30-20060731-040R4" INTERNET CITATION, [Online] XP002468555 Retrieved from the Internet: URL:http://www.3gcn.org/3gpp2/TSGC/Working /2006/2006-07-Montreal/TSG-C-20 06-07-31-Montreal/WG3/> [retrieved on 2008-02-11]
- SIEMENS: "R2-063194 Scheduling for Voip" 3GPP TSG RAN WG2#56, 10 November 2006 (2006-11-10), XP002516025 Riga, Latvia

## Description

### Field of the Invention

This invention relates to communications apparatus and methods and, more particularly, to wireless mobile packet communications apparatus and methods.

### Background of the Invention

The evolution of the mobile cellular standards, such as GSM and WCDMA, has been guided by a desire to provide high capacity and high throughput to individual users in order to support advanced services, such as video and multimedia applications. A proposal for a new flexible cellular system with such capabilities is the Super 3G or Long-Term 3G Evolution (LTE), which may be seen as an evolution of the 3G WCDMA standard. LTE is a packet-switched system in which users share a broadband channel and which allows for flexible resource allocation in which a single user may be provided with very high peak rates.

Among features under consideration for LTE standardization is Frequency Division Duplex (FDD) operation in which uplink (UL) and downlink (DL) between a mobile terminal and a base station use different frequency bands and transmission and reception by the terminal occur simultaneously. In order to obtain sufficient isolation between transmission and reception, such operation may require use of an antenna duplexer at the mobile terminal, which may incur undesirable losses. Depending on the carrier spacing between UL and DL and the operating frequencies, the duplexer loss may vary between 1.5 and 4 dB.

Power consumption has become a problem for such advanced communication systems, as battery technology generally has not kept up with the pace of the increased power required for high data rate services. Moreover, heat dissipation associated with new techniques raises new challenges for mobile phone design. Extra losses in the TRX chain are often directly reflected in the terminal power consumption.

Introducing low power modes with low duty cycles is one way to reduce terminal power consumption. For example, to reduce power consumption in voice applications, a terminal may be activated only to send and receive a VoIP packet every 20ms or so and, in between these windows, the terminal may be placed into a low-power sleep mode.

A document written by IPWIRELESS ET AL: "RI-080504 Operation of Half Duplex" 3GPP TSG RAN WG1#5I BIS, 18 January 2008 (2008-01 -18), XP002516024 Seville, Spain discuss over some basic principles of half duplex operation.

Further, DAJIE JIANG ET AL discusses over Principle and Performance of Semi-persistent Scheduling for VoIP in LTE System in an article in WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 2861-2864, XP031261882 ISBN: 978-1-4244-1 31 1-9

The document WO 2008/024890 A concerns techniques for assigning resources for spurts of traffic in a wireless communication system. The system may support semi-persistent and non-persistent resource assignments. A semi-persistent resource assignment is valid for as long as more data is sent within a predetermined time period of last sent data and expires if no data is sent within the predetermined time period. A non-persistent resource assignment is valid for a predetermined duration or a specific transmission. A semi-persistent resource assignment may be granted for an expected spurt of data to send via the communication link.

Further, information concerning a Joint Proposal for 3GPP2 Physical Layer for FDD Spectra may be comprised on a web page from China Unicom, unfortunately published in Chinese: "Joint Proposal for 3GPP2 Physical Layer for FDD Spectra; C30-20060731-040R4" INTERNET CITATION, [Online] XP002468555 Retrieved from the internet: URL:http://www.3gcn.org/3gpp2iTSGCIWorking 1200612006-07-MontrealiTSG-C-20 06-07-31 -Montreal/WG3/> [retrieved on 2008-02-11].

Additionally, discussions concerning Scheduling for Voip has been held In Riga, Latvia, see the document SIEMENS: "R2-063194 Scheduling for Voip" 3GPP TSG RAN WG2#56, 10 November 2006 (2006-11-10), XP002516025 Riga, Latvia.

### Summary of the Invention

Some embodiments of the present invention provide methods of operating a wireless communications system wherein packet transmissions between a base station and terminals are performed using half-duplex uplink and downlink transmission intervals with adaptive intra-interval packet retransmission and packet expansion, e.g., packet expansion. The uplink and downlink transmission intervals used for communication with a terminal may be offset commensurate with a degree of symmetry of information flow between the terminal and the base station. The offset between the uplink and downlink transmission intervals may be adaptively adjusted based on a type of information being communicated between terminals and the base station. For example, different offsets may be used for voice and data communications. In some embodiments of the present invention, uplink and downlink transmission intervals for communications with a terminal have substantially equal durations. For example, voice packet transmissions between the base station and the terminal may use uplink and downlink transmission intervals having substantially equal durations.

Further embodiments of the present invention provide a wireless base station including a radio interface circuit configured to support packet transmissions with terminals using half-duplex uplink and downlink transmission intervals with adaptive intra-interval packet retransmission and packet expansion. The radio interface circuit may be configured to support uplink and downlink transmission intervals for communication with a terminal that are offset commensurate with a degree of symmetry of information flow between the terminal and the base station. The radio interface circuit may be configured to adaptively adjust an offset between the uplink and downlink transmission intervals based on a type of information being communicated between terminals and the base station. For example, the radio interface circuit may be configured to apply different offsets for voice and data communications. The radio interface circuit may be configured to support uplink and downlink transmission intervals for communications with a terminal that have substantially equal durations. For example, the radio interface circuit may be configured to support voice packet transmissions between the base station and the terminal using uplink and downlink transmission intervals having substantially equal durations.

In still further embodiments of the present invention, a wireless terminal includes a radio interface circuit configured to support packet transmissions with a base station using half-duplex uplink and downlink transmission intervals with adaptive intra-interval packet retransmission and packet expansion. The radio interface circuit may be configured to support uplink and downlink transmission intervals that are offset commensurate with a degree of symmetry of information flow between the terminal and the base station. The radio interface circuit may be configured to adaptively adjust an offset between the uplink and downlink transmission intervals based on a type of information being communicated between the terminal and the base station. For example, the radio interface circuit may be configured to apply different offsets for voice and data communications. The radio interface circuit may be configured to support uplink and downlink transmission intervals having substantially equal durations. For example, the radio interface circuit may be configured to support voice packet transmissions between the base station and the terminal using uplink and downlink transmission intervals having substantially equal durations.

### Brief Description of the Drawings

FIGs. 1-3 are schematic diagrams illustrating mobile terminal and base station apparatus and operations according to some embodiments of the present invention.

FIGs. 4A-C and 5A-C are timing diagrams illustrating offset of uplink and downlink for half-duplex communications with retransmission and adaptive modulation and/or coding according to further embodiments of the present invention.

### Detailed Description

The present invention now will be described more fully hereinafter with reference to the accompanying figures, in which embodiments of the invention are shown. This invention may, however, be embodied in many alternate forms and should not be construed as limited to the embodiments set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" (and variants thereof) when used in this specification, specify the presence of stated features, integers, steps, operations, elements, and/or components, but do not preclude the presence or addition of one or more other features, integers, steps, operations, elements, components, and/or groups thereof. Moreover, when an element is referred to as being "responsive" to another element/step (and variants thereof), it can be directly responsive to the other element/step, or intervening elements/steps may be present. In contrast, when an element/step is referred to as being "directly responsive" to another element/step (and variants thereof), there are no intervening elements/steps present. As used herein the term "and/or" includes any and all combinations of one or more of the associated listed items and may be abbreviated as "/".

It will be understood that, although the terms first, second, etc., may be used herein to describe various elements, these elements should not be limited by these terms. These terms are only used to distinguish one element from another.

The present invention is described below with reference to schematic diagrams illustrating methods, apparatus (systems and/or devices) and/or computer program products according to embodiments of the invention. It is understood that a block of the diagrams, and combinations of blocks in the diagrams can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means (functionality) and/or structure for implementing the functions/acts specified in the diagrams. These computer program instructions may also be stored in a computer-readable memory that can direct a computer or other programmable data processing apparatus to function in a particular manner, such that the instructions stored in the computer-readable memory produce an article of manufacture including instructions which implement the function/act as specified in the diagrams. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the diagrams.

Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate or transport the program for use by or in connection with the instruction execution system, apparatus, or device.

The computer-usable or computer-readable medium may be, for example, an electronic, magnetic, optical, electromagnetic or semiconductor system, apparatus or device. More specific examples (a non-exhaustive list) of the computer-readable medium would include the following: a portable computer diskette, a random access memory (RAM), a read-only memory (ROM), an erasable programmable read-only memory (EPROM or Flash memory), and a portable optical and/or magnetic media, such as a flash disk or CD-ROM.

Exemplary embodiments described herein relate to communications between terminals and base stations. It will be appreciated that "terminals" may include, but are not limited to, personal communications devices, such as cellular handsets, wireless-enabled personal digital assistants (PDAs) and similar devices, as well as wireless-enabled computers, such as wireless-enabled laptop, notebook and subnotebook computers. Such terminals may also be referred to as "user equipment" (UE) herein. "Base station" refers to a node that serves as a radio access point for terminals to a wireless communications system, including, but not limited to, cellular base stations, wireless access points, and the like.

Some embodiments of the present invention arise from a realization that use of a lossy duplexer can be avoided by using half-duplex uplink and downlink transmission intervals that support adaptive use of intra-interval packet retransmission (e.g., in an interference-limited condition) and packet expansion (e.g. packet expansion due to radio link adaptation, such as adaptive modulation and/or coding that may be used in a noise-limited condition). A time offset between uplink and downlink may be fixed and/or may be varied based on the type of communications, for example, based on a degree of symmetry of data flow between the uplink and the downlink. For example, for voice applications, uplink and downlink transmissions may have substantially equal durations to support the substantially symmetric nature of voice communications. For example, in an LTE implementation having a repetition period of 20 ms, the uplink and downlink transmission intervals may be offset by about one-half of the repetition period, e.g., around 10 ms. In further embodiments, an asymmetrical offset may be used for other applications, e.g., data applications, such as web browsing.

As discussed above, full duplex operation may require the use of a lossy duplexer. Half-duplex operation may be better in this respect because transmission and reception do not occur simultaneously, which can eliminate the need for a duplexer. For symmetric services, such as Voice over IP (VoIP), half-duplex operation may be achieved using time staggering of uplink and downlink. However, small time staggering may not allow sufficient time for packet expansion due to link adaptation in noise-limited conditions (e.g., at the cell edge) and the application of retransmission in interference-limited conditions (e.g., closer to the base station).

For example, in some embodiments of the present invention, the uplink and downlink transmission intervals in an LTE system may be offset by about half a repetition period. For VoIP in LTE, a 20ms repetition period is used. Therefore, for half-duplex VoIP communications between user equipment (UE) and a base station, a time offset between UL and DL packets of about half of the repetition period or 10ms may be used. In systems like LTE, there may be a limit to the peak output power (21 dBm or 24dBm depending on user equipment (UE) power class), and increases in performance through use of increased UE output power may be limited when the UE is at the cell edge. In such situations, Adaptive Modulation and Coding (AMC) may be used to improve the link budget. AMC, however, may increase the VoIP packet length.

Because of the time offset, both the UL and DL can increase the packet length (up to 10ms each in the example) and a balanced link budget can be achieved. If the UE moves closer to the base station, the reverse operation may be carried out, which may reduce the packet length. In such conditions, the remaining time not used for the VoIP packet can be used for retransmissions in a hybrid (H) ARQ scheme. If the UE enters an interference-limited area, e.g., near the base station, retransmissions may be more effective than AMC.

The timing offset may be determined by the scheduling mechanism in the LTE base station and can be easily altered. The UL and DL may be imbalanced (e.g., have different link budgets in UL and DL caused by several reasons like better receiver sensitivity and/or higher transmit power in the base station) and the offset between UL and DL may be changed accordingly. If the link budget in the DL is better, the DL may need less than 50% of the 20ms period, not only because the packets can be shortened for noise-limited conditions, but also because fewer retransmissions may be needed. In interference-limited situations, the UL may be better due to multi-user detection capabilities in the base station.

In such situations, the UL may need less than 50% of the 20 ms repetition period.

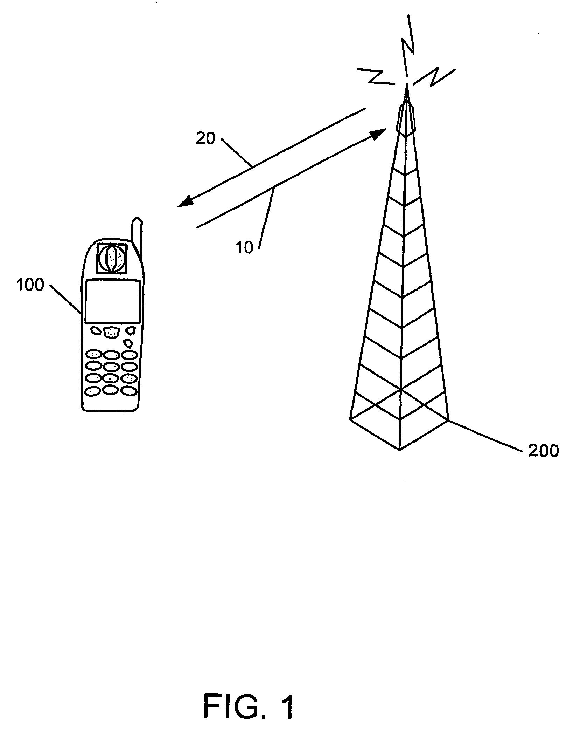

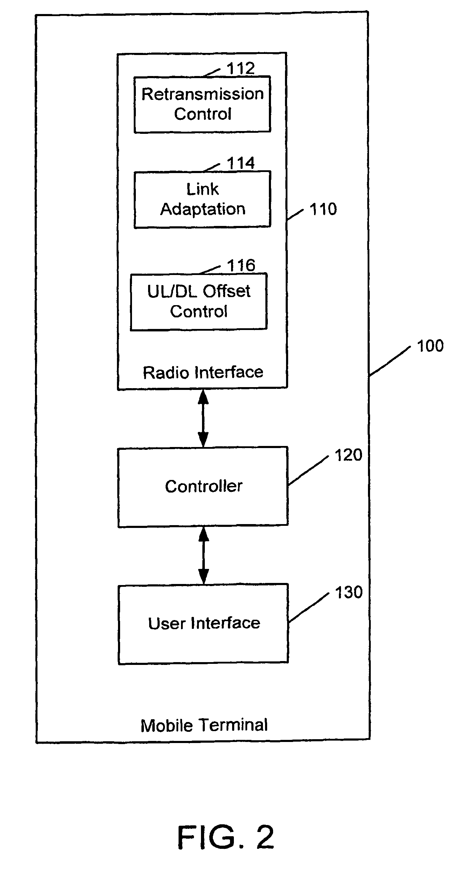

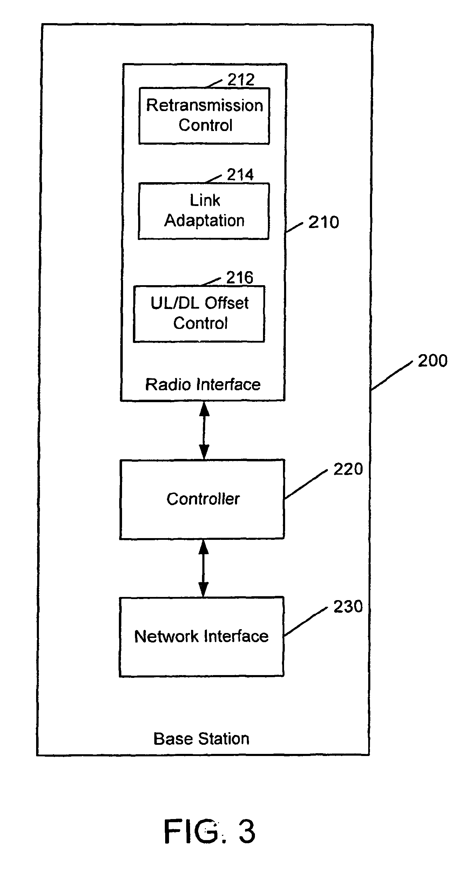

FIGs. 1-3 illustrate a mobile terminal 100 and base station 200 according to some embodiments of the present invention. Referring to FIG. 1, the mobile terminal 100 and base station communicate over an uplink 10 and a downlink 20 having half-duplex transmission intervals that support intra-interval packet retransmission and packet expansion due to link adaptation. Referring to FIG. 2, the mobile terminal 100 may include radio interface circuitry 110 and user interface circuitry 130 operatively associated with a controller 120, for example, a microprocessor, microcontroller or other control circuitry. Referring to FIG. 3, the base station 200 may include radio interface circuitry 210 and network interface circuitry 230 operatively associated with a controller 220, for example, a microprocessor, microcontroller or other control circuitry.

As further illustrated in FIGs. 2 and 3, the respective radio interface circuits 110, 210 are configured to support the uplink 10 and downlink 20. The radio interface circuitry 110, 210 may include, for example, baseband processors, mixers, power amplifiers, antennas and other signal transmission, reception and processing components. As further illustrated, the radio interface circuitry 110, 210 further include control circuitry configured to support adaptive application of packet retransmission 112,212 and link adaptation 114, 214, along with circuitry that controls uplink (UL) and downlink (DL) timing offset control 116, 216. The packet retransmission circuitry 112, 212 may be configured, for example, to implement an automatic repeat request (ARQ) mechanism wherein a receiving device, i.e., either the mobile terminal 100 or the base station 200, may request and obtain full or partial retransmission of packets to correct packet reception errors. The link adaptation circuitry 114, 214 may be configured, for example, to adaptively change the modulation scheme and/or the error correction coding scheme, which may be used, for example, to provide improved reception in noise-limited conditions, such as when the mobile terminal 100 is located a substantial distance from the base station 200 (e.g., at a cell edge).

The UL/DL offset control circuitry 116, 216 may be configured to control relative timing of transmission windows for the uplink 10 and downlink 20 in support of the packet retransmission circuitry 112, 212 and the link adaptation circuitry 114, 214. In particular, the UL/DL offset control circuitry 116, 216 may provide durations for transmission intervals for uplink 10 and the downlink 20 sufficient to allow packet retransmission under a first propagation condition, for example, an interference-limited condition as might occur when the mobile terminal 100 is near the base station 200, and for packet expansion due to AMC under a second propagation condition, for example, a noise-limited condition as might occur when the mobile terminal 100 is relative distant from the base station 200. In some embodiments, the UL/DL timing offset control circuitry 116, 216 my be configured to vary a timing offset between the uplink 10 and the downlink 20 based on the type of communications being conducted between the mobile terminal 100 and the base station 200.

VoIP performance is an important issue in the new cellular packet-switched systems like LTE and WiMAX. In particular, the talk time, which is generally directly coupled to the power consumption, is under investigation. Half-duplex systems may be preferable, as no duplexer, which may introduce loss in the transmit and receive chains, is required. Both LTE and WiMAX have advanced link adaptation schemes in order to improve coverage and reduce the effects of interference. In particular, Hybrid ARQ (HARQ) is used for retransmission of data, or sending incremental data to help error recovery schemes in the receivers. Furthermore, link adaptation is obtained using AMC, which switches between more spectrally efficient but more sensitive modulation schemes like 64-QAM and more robust but less efficient schemes like QPSK. In addition, with AMC, stronger or weaker coding schemes can be applied, for example, using punctured convolutional codes.

At the cell edge, the UE may be in noise-limited conditions. The received signal strength (RSS) may be just above the noise floor. Improvement of the link performance or extending the coverage can be achieved with AMC, i.e., by using simpler constellation schemes and/or by additional coding bits in order to increase the energy per bit. But since the peak output power is fixed, this may result in a longer time per bit. So for the same amount of information bits to be sent, longer packets may be needed. In a balanced link, UL and DL may have about the same link budget. Assuming symmetric traffic like voice (VoIP), the same AMC may be applied in UL and DL. In order to allow for the largest packet length extension, the time offset between UL and DL half-duplex operation may be set to about half the repetition period, which is 20 ms for most voice schemes including VoIP. So, for a voice service, 10 ms may be an optimal timing offset between UL and DL in a balanced link.

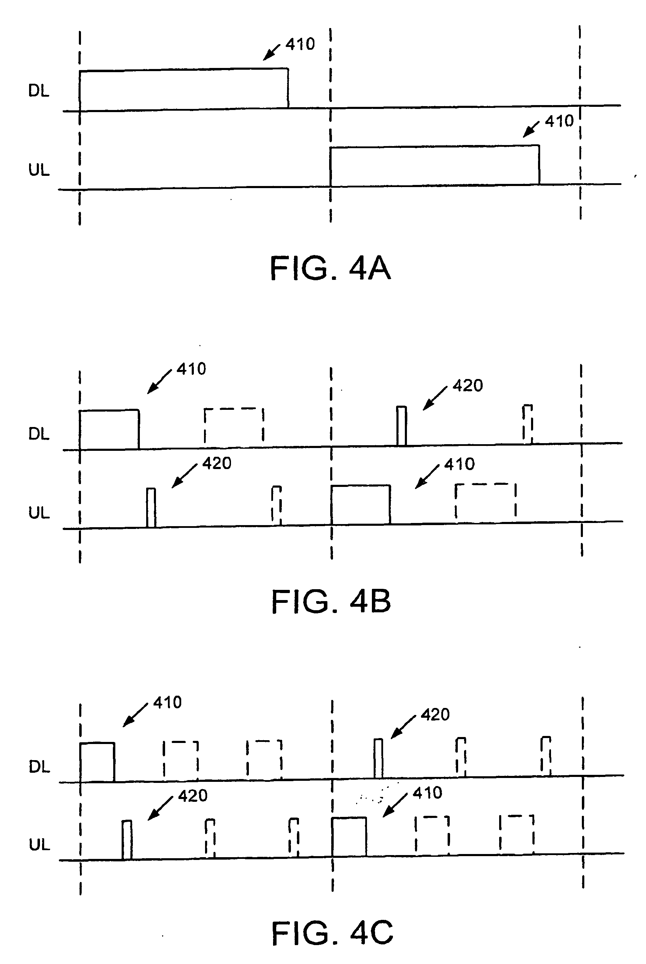

This is illustrated in FIGs. 4A-C. Referring to FIG. 4A, near the cell edge, more energy per packet 410 generally will be required, which may be accomplished by increasing the packet length. Referring to FIGs. 4B and 4C, as the UE moves closer to the base station, shorter packets 410 can be used. However, the time freed up can now be used for retransmissions in response to acknowledgments 420. Retransmissions may be more effective in interference-limited conditions, which are often found closer to the base station. Some embodiments provide an advantageous way to optimize the links with short packets with many retransmissions in an interference-limited environment, and long packets with few retransmissions in a noise-limited environment.

It is shown in FIGs. 4A-C that, after transmission of each packet 410, there is an acknowledgement packet 420 transmitted in the opposite direction, if the time window allows. This signalling is used in the HARQ protocol. Preferably, the acknowledgement packet 420 follows the end of the data packet 410 it refers to with a fixed time delay. In the illustrated example, the time offset between the UL and DL VoIP is fixed at 10 ms. In current specifications, reserving slots in LTE is done through persistent scheduling, with the persistent scheduling mechanism relating to the leading edge of the first VoIP packet. Retransmission is done through dynamic scheduling, that is, the first UE acknowledgement slot is also reserved, but subsequent retransmissions with signalling are not. Using a fixed time offset according to some embodiments of the present invention may be attractive, as the persistent scheduling need not change when the packet length increases. Therefore, the scheduling does not have to be updated each time the UE position changes. Indeed, in-band signalling or blind detection can be applied to indicate the change in AMC and, therefore, the change in packet length.

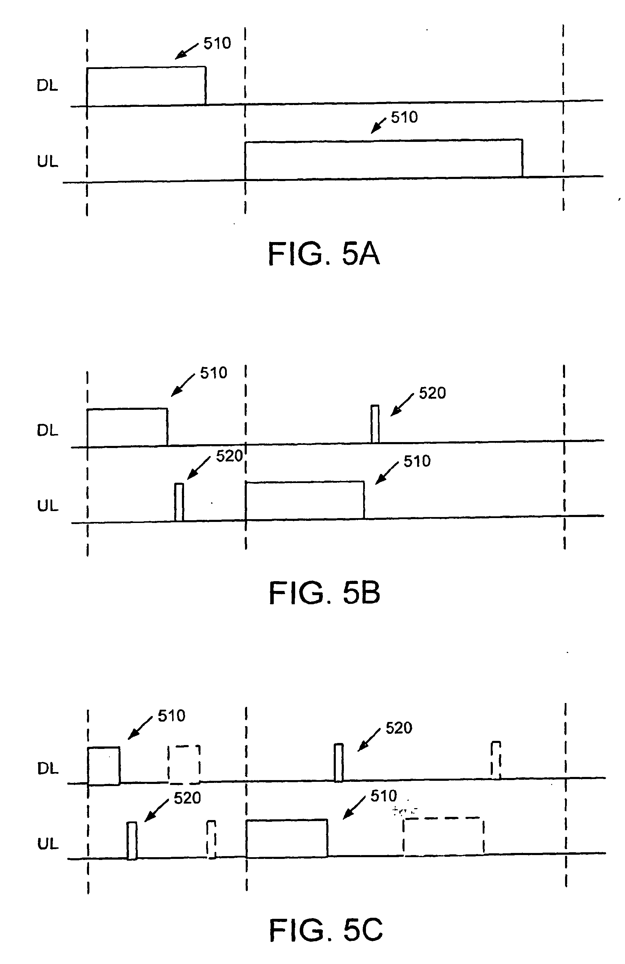

According to further embodiments of the present invention, the uplink and downlink transmission intervals may be asymmetric. For example, in the LTE downlink, larger peak power can be used resulting in a larger link budget. This difference in link budget can be reflected in the half-duplex offset between UL and DL as is shown in FIGs. 5A-C. In this case, the DL is allocated a shorter part of the 20 ms period than the UL, while providing retransmission and link adaptation in a manner similar to that shown in FIGs. 4A-C. Because more power can be allocated in the DL, the packets 410 transmitted on the DL may be shorter than those transmitted on the UL, while still having an increased energy per bit. Furthermore, less retransmission may be required to achieve the same residual packet error rate (PER) as in the UL.

It will be further understood that relative offset between UL and DL transmission intervals may be fixed and/or have varying degrees of adaptability. For example, in some embodiments, such as in some voice-only or data/only applications, a fixed offset between UL and DL transmission intervals may be provided. In other embodiments, a system may transition between different transmission interval offsets for different modes, i.e., different offsets for voice and data modes, but the interval offset may remain fixed while in a particular mode. In further embodiments, however, DL/UL transmission interval offsets may be more adaptive, for example, UL/DL transmission interval offsets in a data application may be varied based on the type of data application and/or other parameters. It will also be understood that embodiments according to the present invention include embodiments in which UL and DL transmissions use the same or at least some of the same frequencies (e.g., in certain Time Division Duplex (TDD) or orthogonal frequency division multiplex (OFDM) embodiments), as well as embodiments in which the UL and DL transmissions do not share frequencies (e.g., in certain FDD embodiments).

In the drawings and specification, there have been disclosed embodiments of the invention and, although specific terms are employed, they are used in a generic and descriptive sense only and not for purposes of limitation, the scope of the invention being set forth in the following claims.

## Claims

1. A method of operating a wireless communications system, the method comprising:
performing packet transmissions between a base station (200) and terminals (100) in half-duplex uplink (10) and downlink (20) transmission intervals with adaptive intra-interval packet retransmission, adaptive modulation and coding "AMC" and variation of a timing offset of the uplink (10) and downlink (20) transmission intervals, based on a type of communications being conducted between the terminals (100) and the base station (200).

2. The method according to Claim 1, wherein the uplink (10) and downlink (20) transmission intervals used for communication with a terminal (100) are adaptively offset commensurate with a degree of symmetry of information flow between the terminal (100) and the base station (200).

3. The method according to Claim 1, comprising applying different offsets for voice and data communications.

4. The method according to any of the Claims 1-3, wherein performing packet transmissions over half-duplex uplink (10) and downlink (20) transmission intervals with adaptive intra-interval packet retransmission, adaptive modulation and coding "AMC" and adaptive variation of relative durations of the uplink (10) and downlink (20) transmission intervals comprises performing voice packet transmissions between the base station (200) and the terminal (100) using (10) downlink (20) transmission intervals having substantially equal durations.

5. The method according to any of the Claims 1-4, wherein performing packet transmissions in half-duplex uplink and downlink transmission intervals with adaptive intra-interval packet retransmission, adaptive modulation and coding "AMC" and adaptive variation of relative durations of the uplink (10) and downlink (20) transmission intervals comprises communicating with a terminal (100) without using a duplexer at the terminal (100).

6. A wireless base station (200) comprising:
a radio interface circuit (210) configured to support packet transmissions with terminals (100) using half-duplex uplink (10) and downlink (20) transmission intervals with adaptive intra-interval packet retransmission, the wireless base station (200) is **characterized by** that the radio interface circuit (210) is further configured for adaptive modulation and coding "AMC" and variation of timing offsets of the uplink (10) and downlink (20) transmission intervals based on a type of communications being conducted between the terminals (100) and the base station (200).

7. The wireless base station (200) according to Claim 6, wherein the radio interface circuit (210) is configured to support uplink (10) and downlink (20) transmission intervals for communication with a terminal (100) that are adaptively offset commensurate with a degree of symmetry of information flow between the terminal (100) and the base station (200).

8. The wireless base station (200) according to Claim 6, wherein the radio interface circuit (210) is configured to apply different offsets for voice and data communications.

9. The wireless base station (200) according to any of the Claims 6-8, wherein the radio interface circuit (210) is configured to support uplink (10) and downlink (20) transmission intervals for communications with a terminal (100) that have substantially equal durations.

10. The wireless base station (200) according to Claim 9, wherein the radio interface circuit (210) is configured to support voice packet transmissions between the base station (200) and the terminal (100) using uplink (10) and downlink (20) transmission intervals having substantially equal durations.

11. A wireless terminal (100) comprising:
a radio interface circuit (110) configured to support packet transmissions with a base station (200) using half-duplex uplink (10) and downlink (20) transmission intervals with adaptive intra-interval packet retransmission, the wireless terminal (100) is **characterized by** that the radio interface circuit (110) is further configured for adaptive modulation and coding "AMC" and variation of a timing offset of the uplink (10) and downlink (20) transmission intervals based on a type of communications being conducted between the wireless terminal (100) and the base station (200).

12. The terminal according to Claim 11, wherein the radio interface circuit (110) is configured to support uplink (10) and downlink (20) transmission intervals that are offset commensurate with a degree of symmetry of information flow between the terminal (100) and the base station (200).

13. The terminal according to Claim 11, wherein the radio interface circuit (110) is configured to apply different offsets for voice and data communications.

14. The terminal according to any of the Claims 11-13, wherein the radio interface circuit (110) is configured to support voice packet transmissions between the base station (200) and the terminal (100) using uplink (10) and downlink (20) transmission intervals having substantially equal durations.

15. The terminal according to any of the Claims 11-14, wherein the radio interface circuit (110) is configured to support the packet transmissions with the base station (200) using the half-duplex uplink (10) and downlink (20) transmission intervals without using a duplexer.

## Patentansprüche

1. Verfahren zum Betreiben eines Drahtloskommunikationssystems, wobei das Verfahren umfasst:
Durchführen von Paketübertragungen zwischen einer Basisstation (200) und Endgeräten (100) in Halbduplex-Uplink- (10) und Downlink (20)-Übertragungsintervallen mit adaptiver intra-Intervall Paket-Rückübertragung, adaptiver Modulation und Kodierung "AMC" und Variation eines Zeitsteuerungsoffsets der Uplink-(10) und Downlink (20)-Übertragungsintervalle, basierend auf einem Typ von Kommunikationen, die zwischen den Endgeräten (100) und der Basisstation (200) ausgeführt werden.

2. Verfahren nach Anspruch 1, wobei die Uplink-(10) und Downlink (20)-Übertragungsintervalle, die für eine Kommunikation mit einem Endgerät (100) verwendet werden, adaptiv entsprechend einem Symmetriegrad eines Informationsflusses zwischen dem Endgerät (100) und der Basisstation (200) abgesetzt sind.

3. Verfahren nach Anspruch 1, dass weiterhin Anwenden verschiedener Offsets für Sprach-und Datenkommunikationen umfasst.

4. Verfahren nach einem der Ansprüche 1-3, wobei Durchführen von Paketübertragungen über Halbduplex-Uplink- (10) und Downlink (20)-Übertragungsintervalle mit adaptiver intra-Intervall Paket-Rückübertragung, adaptiver Modulation und Kodierung "AMC" und adaptiver Variation von relativen Dauern der Uplink-(10) und Downlink (20)-Übertragungsintervalle umfasst Durchführen von Sprachpaketübertragungen zwischen der Basisstation (200) und dem Endgerät (100) unter Verwendung von (10) Downlink-(20) Übertragungsintervallen mit wesentlich gleichen Dauern.

5. Verfahren nach einem der Ansprüche 1-4, wobei Durchführen von Paketübertragungen über Halbduplex-Uplink- (10) und Downlink (20)-Übertragungsintervalle mit adaptiver intra-Intervall Paket-Rückübertragung, adaptiver Modulation und Kodierung "AMC" und adaptiver Variation von relativen Dauern der Uplink-(10) und Downlink (20)-Übertragungsintervalle umfasst Kommunizieren mit einem Endgerät (100), ohne einen Duplexer an dem Endgerät (100) zu verwenden.

6. Drahtlosbasisstation (200), die umfasst:
eine Funkschnittstellenschaltung (210), die eingerichtet ist zum Unterstützen von Paketübertragungen mit Endgeräten (100) unter Verwendung von Halbduplex-Uplink-(10) und Downlink (20)-Übertragungsintervallen mit adaptiver intra-Intervall Paket-Rückübertragung, wobei die Drahtlosbasisstation (200) **dadurch gekennzeichnet ist, dass** die Funkschnittstellenschaltung (210) weiterhin eingerichtet ist für eine adaptive Modulation und Kodierung "AMC" und eine Variation eines Zeitsteuerungsoffsets der Uplink-(10) und Downlink (20)-Übertragungsintervalle, basierend auf einem Typ von Kommunikationen, die zwischen den Endgeräten (100) und der Basisstation (200) ausgeführt werden.

7. Drahtlosbasisstation (200) nach Anspruch 6, wobei die Funkschnittstellenschaltung (210) eingerichtet ist zum Unterstützen von Uplink- (10) und Downlink (20)-Übertragungsintervallen, die für eine Kommunikation mit einem Endgerät (100) verwendet werden, die adaptiv entsprechend einem Symmetriegrad eines Informationsflusses zwischen dem Endgerät (100) und der Basisstation (200) abgesetzt sind.

8. Drahtlosbasisstation (200) nach Anspruch 6, wobei die Funkschnittstellenschaltung (210) eingerichtet ist zum Anwenden verschiedener Offsets für Sprach-und Datenkommunikationen.

9. Drahtlosbasisstation (200) nach einem der Ansprüche 6-8, wobei die Funkschnittstellenschaltung (210) eingerichtet ist zum Unterstützen von Uplink-(10) und Downlink (20)-Übertragungsintervallen für Kommunikationen mit einem Endgerät (100), die im wesentlich gleichen Dauern aufweisen.

10. Drahtloskommunikationsvorrichtung (200) nach Anspruch 9, wobei die Funkschnittstellenschaltung (210) eingerichtet ist zum Unterstützen von Sprachpaketübertragungen zwischen der Basisstation (200) und dem Endgerät (100) unter Verwendung von Uplink-(10) und Downlink (20)-Übertragungsintervallen mit im wesentlich gleichen Dauern.

11. Drahtlosendgerät (100), das umfasst:
eine Funkschnittstellenschaltung (110), die eingerichtet ist zum Unterstützen von Paketübertragungen mit einer Basisstation (200) unter Verwendung von Halbduplex-Uplink- (10) und Downlink (20)-Übertragungsintervallen mit adaptiver intra-Intervall Paket-Rückübertragung, wobei das Drahtlosendgerät (100) **dadurch gekennzeichnet ist, dass** die Funkschnittstellenschaltung (110) weiterhin eingerichtet ist für eine adaptive Modulation und Kodierung "AMC" und eine Variation eines Zeitsteuerungsoffsets der Uplink-(10) und Downlink (20)-Übertragungsintervalle, basierend auf einem Typ von Kommunikationen, die zwischen den Endgeräten (100) und der Basisstation (200) ausgeführt werden.

12. Endgerät nach Anspruch 11, wobei die Funkschnittstellenschaltung (110) eingerichtet ist zum Unterstützen von Uplink- (10) und Downlink (20)-Übertragungsintervallen, die entsprechend einem Symmetriegrad eines Informationsflusses zwischen dem Endgerät (100) und der Basisstation (200) abgesetzt sind.

13. Endgerät nach Anspruch 11, wobei die Funkschnittstellenschaltung (110) eingerichtet ist zum Anwenden verschiedener Offsets für Sprach-und Datenkommunikationen.

14. Endgerät nach einem der Ansprüche 11-13, wobei die Funkschnittstellenschaltung (110) eingerichtet ist zum Unterstützen von Sprachpaketübertragungen zwischen der Basisstation (200) und dem Endgerät (100) unter Verwendung von Uplink-(10) und Downlink (20)-Übertragungsintervallen mit im wesentlich gleichen Dauern.

15. Endgerät nach einem der Ansprüche 11-14, die Funkschnittstellenschaltung (110) eingerichtet ist zum Unterstützen von Paketübertragungen mit der Basisstation (200) unter Verwendung von Halbduplex-Uplink-(10) und Downlink (20)-Übertragungsintervallen, ohne einen Duplexer zu verwenden.

## Revendications

1. Procédé de fonctionnement d'un système de communications sans fil, le procédé comprenant :
la réalisation de transmissions par paquets entre une station de base (200) et des terminaux (100) dans des intervalles de transmission de liaison montante (10) et de liaison descendante (20) semi-duplex avec une retransmission de paquets intra-intervalle adaptative, une modulation et un codage adaptatifs "AMC" et une variation d'un décalage de minutage des intervalles de transmission de liaison montante (10) et de liaison descendante (20), en fonction d'un type de communications qui sont effectuées entre les terminaux (100) et la station de base (200).

2. Procédé selon la revendication 1, dans lequel les intervalles de transmission de liaison montante (10) et de liaison descendante (20) utilisés pour une communication avec un terminal (100) sont décalés de façon adaptative en concordance avec un degré de symétrie de circulation d'information entre le terminal (100) et la station de base (200).

3. Procédé selon la revendication 1, comprenant l'application de décalages différents pour des communications de voix et de données.

4. Procédé selon l'une quelconque des revendications 1 à 3, dans lequel la réalisation de transmissions par paquets sur des intervalles de transmission de liaison montante (10) et de liaison descendante (20) semi-duplex avec une retransmission de paquets intra-intervalle adaptative, une modulation et un codage adaptatifs "AMC" et une variation adaptative de durées relatives des intervalles de transmission de liaison montante (10) et de liaison descendante (20) comprend la réalisation de transmissions de paquets de voix entre la station de base (200) et le terminal (100) à l'aide d'intervalles de transmission (10) de liaison descendante (20) ayant des durées sensiblement égales.

5. Procédé selon l'une quelconque des revendications 1 à 4, dans lequel la réalisation de transmissions par paquets dans des intervalles de transmission de liaison montante et de liaison descendante semi-duplex avec une transmission de paquets intra-intervalle adaptative, une modulation et un codage adaptatifs "AMC" et une variation adaptative de durées relatives des intervalles de transmission de liaison montante (10) et de liaison descendante (20) comprend une communication avec un terminal (100) sans utiliser de duplexeur dans le terminal (100).

6. Station de base sans fil (200), comprenant :
un circuit d'interface de radio (210) configuré de façon à supporter des transmissions par paquets avec des terminaux (100) à l'aide d'intervalles de transmission de liaison montante (10) et de liaison descendante (20) semi-duplex avec une retransmission de paquets intra-intervalle adaptative, la station de base sans fil (200) étant **caractérisée en ce que** le circuit d'interface de radio (210) est de plus configuré pour une modulation et un codage adaptatifs "AMC" et une variation de décalages de minutage des intervalles de transmission de liaison montante (10) et de liaison descendante (20) en fonction d'un type de communications qui sont effectuées entre les terminaux (100) et la station de base (200).

7. Station de base sans fil (200) selon la revendication 6, dans laquelle le circuit d'interface de radio (210) est configuré de façon à supporter des intervalles de transmission de liaison montante (10) et de liaison descendante (20), pour une communication avec un terminal (100), qui sont décalés de façon adaptative en concordance avec un degré de symétrie de circulation d'information entre le terminal (100) et la station de base (200).

8. Station de base sans fil (200) selon la revendication 6, dans laquelle le circuit d'interface de radio (210) est configuré de façon à appliquer des décalages différents pour des communications de voix et de données.

9. Station de base sans fil (200) selon l'une quelconque des revendications 6 à 8, dans laquelle le circuit d'interface de radio (210) est configuré de façon à supporter des intervalles de transmission de liaison montante (10) et de liaison descendante (20), pour des communications avec un terminal (100), qui ont des durées sensiblement égales.

10. Station de base sans fil (200) selon la revendication 9, dans laquelle le circuit d'interface de radio (210) est configuré de façon à supporter des transmissions de paquets de voix entre la station de base (200) et le terminal (100) à l'aide d'intervalles de transmission de liaison montante (10) et de liaison descendante (20) ayant des durées sensiblement égales.

11. Terminal sans fil (100), comprenant :
un circuit d'interface de radio (110) configuré de façon à supporter des transmissions par paquets avec une station de base (200) à l'aide d'intervalles de transmission de liaison montante (10) et de liaison descendante (20) semi-duplex avec une retransmission de paquets intra-intervalle adaptative, le terminal sans fil (100) étant **caractérisé en ce que** le circuit d'interface de radio (110) est de plus configuré pour une modulation et un codage adaptatifs "AMC" et une variation d'un décalage de minutage des intervalles de transmission de liaison montante (10) et de liaison descendante (20) en fonction d'un type de communications qui sont effectuées entre le terminal sans fil (100) et la station de base (200).

12. Terminal selon la revendication 11, dans lequel le circuit d'interface de radio (110) est configuré de façon à supporter des intervalles de transmission de liaison montante (10) et de liaison descendante (20) qui sont décalés en concordance avec un degré de symétrie de circulation d'information entre le terminal (100) et la station de base (200).

13. Terminal selon la revendication 11, dans lequel le circuit d'interface de radio (110) est configuré de façon à appliquer des décalages différents pour des communications de voix et de données.

14. Terminal selon l'une quelconque des revendications 11 à 13, dans lequel le circuit d'interface de radio (110) est configuré de façon à supporter des transmission de paquets de voix entre la station de base (200) et le terminal (100) à l'aide d'intervalles de transmission de liaison montante (10) et de liaison descendante (20) ayant des durées sensiblement égales.

15. Terminal selon l'une quelconque des revendications 11 à 14, dans lequel le circuit d'interface de radio (110) est configuré de façon à supporter les transmissions par paquets avec la station de base (200) à l'aide des intervalles de transmission de liaison montante (10) et de liaison descendante (20) semi-duplex sans utiliser de duplexeur.
